# EUROPEAN PATENT APPLICATION

(11) **EP 4 707 086 A1**
(43) Date of publication of application: **11.03.2026**
(21) Application number: 24199374.0
(22) Date of filing: 10.09.2024
(51) Int. Cl.: B60T 13/26, B60T 8/17, B60T 8/32

(54) **REDUNDANT BRAKE SYSTEM CONTROLLED BY A CENTRAL PRESSURE MODULATOR**

(71) Applicant: KB Intellectual Property GmbH & Co. KG, 82049 Pullach (DE)
(72) Inventor: GYURKO, Zoltán, 1047 Budapest (HU); NEMETH, Huba, 1116 Budapest (HU); ADLER, Tamas, 2030 Erd (HU); MOLNAR, Peter, 1046 Budapest (HU); THOMEN, Matthias, 70182 Stuttgart (DE); BALOGH, Levente, 2310 Szigetszentmiklós (HU); FARKAS, Peter, 3525 Miskolc (HU)

(57) **Abstract**

A brake system for a commercial vehicle comprises a redundant electro-pneumatic service brake system and an electro-pneumatic parking brake system comprising a redundant central 2-channel electro-pneumatic pressure modulator (7), wherein one of the pneumatic outputs of the pressure modulator (7) controls the parking brake system, and wherein another of the pneumatic outputs of the pressure modulator (7) controls the service brake system. The brake system further comprises a primary electronic brake control unit which is integrated into an air treatment unit (4) of the brake system. The central pressure modulator (7) can receive electronic/electrical parking brake and/or service brake demands from external sources (17, 18) or from a foot brake sensor (5) or a hand control unit (6) due to driver brake demands. The central pressure modulator (7) can control a trailer brake system (8, 15) using a digital communication interface.

## Description

The invention relates to a brake system for a commercial vehicle comprising a redundant electro-pneumatic service brake system and an electro-pneumatic parking brake system.

The autonomous operation of transport vehicles is a new field of innovations. More sophisticated functions require special hardware infrastructure. Until present day, commercial vehicle systems require the presence and attention of the driver. However, in the future, the driver will be less involved into the driving control task of the vehicle. Therefore, automated systems are going to take over more significant driving functions, which requires increased reliability levels and consequently different types of system redundancies. Moreover, from a certain share of total production onwards, such vehicles will either be designed without a cab at all or only with an emergency cab for cost reasons. Accordingly, the driver interface - i.e., the brake pedal - can either be simplified, e.g., without pneumatics, or even eliminated altogether.

This technical situation encompasses the problem that commercial vehicles nowadays use electro-pneumatic or by-wire brake systems where the electronic part of the control is realised as a single circuit control. In case of malfunction of the control electronics the driver can control the pneumatic part of the brake system by his/her foot because a two-circuit pneumatic backup system is still available.

In case of highly automated vehicles where the driver is not anymore in the control loop, or even not available or present in the vehicle, the above brake system would be unsatisfactory since there is no means which would substitute the brake control of the driver in case of malfunction of the single electronic control circuit. Therefore, some redundancy must be added to the control of the brake system.

Publication DE102008009043 B3 shows a redundant brake system for a commercial vehicle. The system utilizes the parking brake integrated into an air supply unit as a redundant brake actuator. For axles not equipped with spring parking brake chambers, the control output of the trailer control module is used as pneumatic control input of the axle modulators.

Publication EP 3626558 B1 describes pneumatic booster valves which can control the backup ports of the axle modulators and optionally the non-inverted input of the trailer control module. These booster valves can be controlled by a dedicated brake control ECU or by the electronic parking brake unit, which can accept electric brake demands and, in this way, pneumatics can be eliminated from the cabin.

Publication EP 3626559 A1 is about a redundant electro-pneumatic brake system, where the axle pressure modulators are equipped with redundant digital communication line towards a secondary brake control ECU. Moreover, these axle modulators do have redundant electric supply. This solution enables to control of the redundant circuit electrically, so pneumatics can be eliminated from the cabin, and the redundant brake system can provide full ESP functionality as well.

Publication EP 3415386 A1 describes a redundant electro-pneumatic brake system, where the electronic parking brake system acts as redundant brake by controlling the spring brake chambers on the rear axle, and by utilizing an inverting relay, the backup port of the front axle modulator can be controlled by the EPB (Electronic Parking Brake) system as well.

Publication EP 3626557 B1 describes a redundant electro-pneumatic brake system, where the electronic parking brake system acts as redundant brake by controlling the spring brake chambers on the rear axle, and by utilizing an non-integrated electro-pneumatic booster valve, the backup port of the front axle modulator can be controlled by the EPB system as well.

Publication EP 3626557 B1 also describes a multiple redundant brake system, which is a combination of the redundant pressure modulators and a redundant electronic parking brake system. In this way, there are three independent electro pneumatic brake systems available on the vehicle which can accept electric brake demands. That enables on the one hand the elimination of pneumatics from the cabin, on the other hand, the vehicle can continue driving in autonomous mode in case of a single failure of the brake system.

Publication EP 2794368 A1 shows a redundant brake system for a commercial vehicle. The system utilizes the parking brake integrated into an air supply unit as a redundant brake actuator. For axles not equipped with spring parking brake chambers the air supply unit includes an additional electro-pneumatic modulator to generate control pressure for the pneumatic control input of the axle modulators.

Publication EP 2229302 A1 shows a redundant brake system for a commercial vehicle. The system utilizes pneumatic brake system as primary and an electro-mechanical system as redundant brake system. All axles are equipped with both types of brake actuators.

Publication EP 3938255 A1 describes a redundant brake system, where the electronic parking brake can drive the front axle modulator's backup port by using an inverting relay valve. Moreover, using a select high valve at the backup port, either the inverting relay, or the brake pedal's pneumatic backup circuit can control the backup port of the front axle modulator, so there is still pneumatics in the cabin.

Publication EP 3749558 A1 discloses an electro-pneumatic redundant brake system, which uses wheel modulators having redundant pneumatic supply. To ensure circuit separation, another service brake circuit is introduced separated by a protection valve, and this circuit can act as redundant pneumatic supply for the electro-pneumatic wheel modules.

Publication EP 4116161 A1 is about a redundant brake system, which utilizes the electronic parking brake system as redundant brake system. The EPB module - which can be integrated into the air treatment unit - consists of a valve arrangement having two inverting and two non-inverting outputs to control the front and rear service brake modulator's backup ports, the front and rear parking brake actuators, and the trailer control module independently as well to implement a redundant electro-pneumatic brake system. The EPB module (and the primary brake control ECU) can receive brake demands directly from the foot brake module or from both autonomous driving ECUs.

Publication EP 3452346 A1 describes a redundant brake system, where the electronic parking brake can drive the rear axle parking brake chambers as a redundant brake circuit. Moreover, using a pneumatic booster valve the backup port of the front axle modulator can be controlled. By adding a bypass valve to this line either the foot brake module's pneumatic outlet port or the pneumatic outlet port of the booster can be connected to the backup port of the front axle modulator. But still, in this way pneumatics is still present in the cabin.

Publication EP 3600992 A1 describes a redundant brake system, where the electronic parking brake can drive the front axle modulator's backup port by using the trailer control module's pneumatic control outlet (yellow line). Moreover, using a select high valve at the backup port, either the inverting relay, or the brake pedal's pneumatic backup circuit can control the backup port of the front axle modulator, so there is still pneumatics in the cabin.

Publication EP 3600994 A1 describes a redundant brake system, where the electronic parking brake is integrated into the trailer control module to implement the redundant electro-pneumatic brake system for a CV.

Publication EP 3787942 A1 discloses a redundant electro pneumatic brake system, where the front and rear axle pressure modulators are having redundant pneumatic supply. Therefore, a third independent service brake pneumatic circuit must be introduced to ensure circuit separation. The redundant axle modules can accept brake demands directly from both autonomous driving ECUs and optionally from a dedicated brake control ECU. The parking module, which can be integrated into the air treatment unit forms the redundant pair of the primary brake circuit. The EPB module does have an inverted output to control the spring brake actuators, and a non-inverting pneumatic outlet port to optionally control the axle pressure modulator's backup port. The axle modules can control service brake actuators only. Parking brake actuators being controlled by independent EPB module.

Publication EP 4001031 A1 describes a brake system, where the electronic parking brake as a redundant brake system equipped with dedicated yaw-rate, acceleration, and wheel-speed sensors to provide full ESP functionality by the redundant system as well. The parking brake module can control the front and rear spring brake actuators independently.

Publication EP 3787943 A1 describes a redundant electro pneumatic brake system, where all brake actuators are controlled by a wheel pressure modulator having redundant pneumatic supply. Therefore, a third independent service brake pneumatic circuit must be introduced to ensure circuit separation. All the wheel pressure modulators can receive brake demands from both autonomous driving ECUs, but the wheel modules can control service brake actuators only. Parking brake actuators being controlled by dedicated EPB module.

It is an object of the present invention to overcome the above discussed problems that are present in the prior art and to provide a respectively improved brake system having suitable redundancy to reliably control the brake system of a commercial vehicle.

According to the present invention, this aim is achieved by a brake system for a commercial vehicle as defined by claim 1. Advantageous embodiments of the invention are defined by the dependent claims 2 to 15.

Accordingly, a brake system for a commercial vehicle is characterized by a redundant electro-pneumatic service brake system and an electro-pneumatic parking brake system comprising a central 2-channel electro-pneumatic pressure modulator, wherein one of the pneumatic outputs of the pressure modulator controls the parking brake system, and wherein another of the pneumatic outputs of the pressure modulator controls the service brake system.

Thus, according to the invention, to achieve a redundant electro-pneumatic brake system, a so-called central, redundant, 2-channel electro-pneumatic pressure modulator is introduced. This pressure modulator consists of a 1-channel service brake pressure modulator, a 1-channel electro-pneumatic parking brake modulator, and a controller with integrated parking brake and service brake control. Optionally, the modulator may also comprise other control functionalities (e.g. high level vehicle dynamics).

According to a preferred embodiment of the present invention, the brake system may comprise a primary electronic brake control unit which is integrated into an air treatment unit of the brake system.

Furthermore, in the brake system of the invention, the commercial vehicle comprises at least one front axle and at least one rear axle, wherein the primary electronic brake control unit is configured such that it electronically controls a front axle pressure modulator, pressure control valves on the front axle, and a rear axle pressure modulator, wherein front axle wheel brakes are actuated by service brake actuators which are pneumatically actuated by the pressure control valves, and wherein the rear axle pressure modulator actuates spring brake combination actuators on the rear axle. Besides, the primary electronic brake control unit may also be configured such that it electronically controls a trailer control module.

Thus, according to these embodiments of the invention, the brake system is configured such that the primary electronic brake control unit is part of a first electric/electronic brake circuit and the central pressure modulator is part of a second electric/electronic brake circuit.

In order to reduce the complexity of the brake system and to save costs, in a further preferred embodiment of the invention, the rear axle pressure modulator can be replaced by the redundant 2-channel electro-pneumatic pressure modulator with integrated electro-pneumatic service and parking brake functions. Thus, instead of having the two separate components of the 2-channel electro-pneumatic pressure modulator and the rear axle pressure modulator, in this embodiment, the 2-channel electro-pneumatic pressure modulator and the rear axle pressure modulator are integrated with each other, i.e. form just one single component.

In order to further enhance the redundancy aspects of the brake system of the invention, an electric power supply is provided for the primary electronic brake control unit which is integrated into the air treatment unit, and a separate, independent electric power supply is provided for the redundant 2-channel electro-pneumatic pressure modulator. In addition, a further, separate, independent electric power supply can be provided for the parking brake module of the redundant 2-channel electro-pneumatic pressure modulator. This latter configuration results in a three-circuit redundant brake system architecture.

In further embodiments of the invention, the central 2-channel electro-pneumatic pressure modulator can receive electronic parking brake demand signals from external sources and/or from a hand control unit to fulfil driver brake demands.

Furthermore, the central 2-channel electro-pneumatic pressure modulator can receive electronic service brake demand signals from external sources and/or from a foot brake sensor to fulfil driver brake demands.

Accordingly, the central 2-channel electro-pneumatic pressure modulator can receive electrical/electronic parking and service brake demands from external sources, for instance from a Highly Automated Drive (HAD) ECU, or optionally by a driver demand utilizing a Foot Brake Sensor (FBS) or a Hand Control Unit (HCU) via digital communication interfaces.

In further embodiments of the invention, the central 2-channel electro-pneumatic pressure modulator can control a trailer brake system using a digital communication interface. Herein, the central pressure modulator can control the trailer brake system using digital trailer CAN (ISO 11992) communication interface and/or using digital trailer ethernet communication interface. Accordingly, optionally, the central pressure modulator can send brake demands toward the trailer via CAN (ISO 11992) communication interface/protocol or via a trailer ethernet communication interface.

Further details and advantages of the invention will be explained in the following detailed description of various embodiments of the invention in combination with the attached drawings.

Fig. 1 shows an electro-pneumatic brake system with a central redundant pressure modulator in a first embodiment of the invention.

Fig. 2 shows another embodiment of an electro-pneumatic brake system with a central redundant pressure modulator according to the invention.

Fig. 3 shows yet another embodiment of an electro-pneumatic brake system with a central redundant pressure modulator according to the invention.

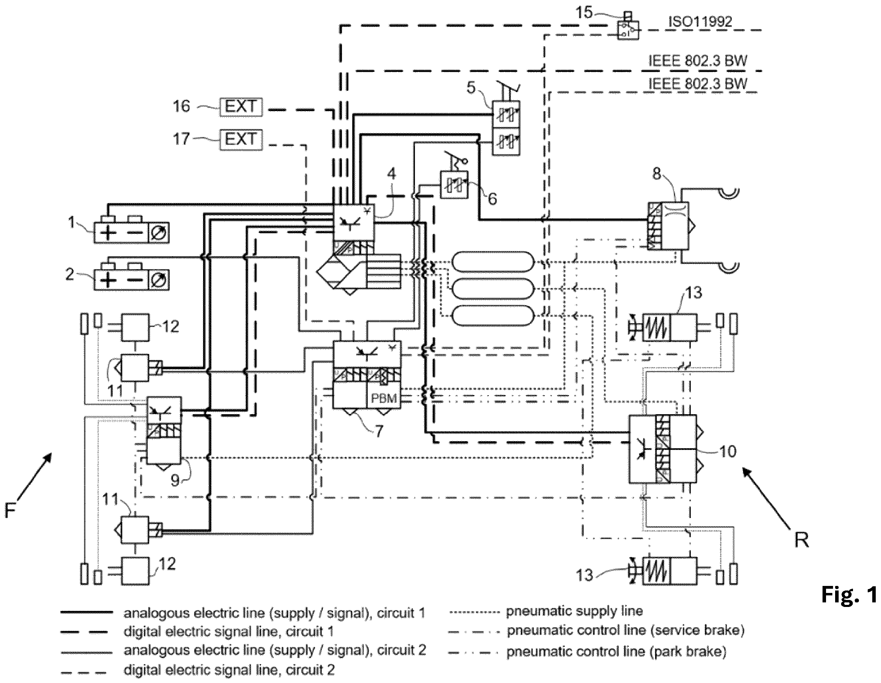

A brake system architecture of a commercial vehicle is shown in Fig. 1. As schematically shown, the vehicle comprises a front axle F and a rear axle R. It will be appreciated that any other number of front and/or rear axles can be provided in the vehicle. The brake system comprises a primary electronic brake control unit (EBS) which forms and/or is part of a first (electric/electronic) brake circuit. This primary EBS unit is integrated into the air treatment unit 4 (which supplies pressurized air by pneumatic supply lines to the concerned components of the brake system, as shown in the drawings). The primary EBS unit is electrically supplied from a battery 1.

The EBS unit electronically controls the front axle pressure modulator 9, the pressure control valves 11 on the front axle F, the rear axle pressure modulator 10, and the trailer control module 8. The front axle wheel brakes are actuated by the service brake chambers/actuators 12 which are pneumatically actuated by the pressure control valves 11. On the rear axle R, spring brake combination cylinders/actuators 13 are used which are actuated by the rear axle pressure modulator 10.

To achieve a redundant electro-pneumatic brake system, a so-called central, redundant, 2-channel electro-pneumatic pressure modulator 7 is introduced. This unit consists of a 1-channel service brake pressure modulator and a 1-channel electro-pneumatic parking brake modulator (PBM). Modulator 7 further comprises a controller with integrated parking brake and service brake control, and optionally other control functionalities (e.g. high level vehicle dynamics). Modulator 7 forms and/or is part of a second (electric/electronic) brake circuit, as is evident from the drawings.

The central 2-channel electro-pneumatic pressure modulator 7 is electrically supplied from a battery 2. Thus, the overall brake system is redundantly supplied by batteries 1 and 2.

Pressure modulator 7 can receive electrical parking and/or service brake demand signals from external sources, for instance from a Highly Automated Drive (HAD) ECU 17, or optionally driver demand signals utilizing a Foot Brake Sensor (FBS) 5 or Hand Control Unit (HCU) 6 via digital communication interfaces. Optionally, the central pressure modulator 7 can send brake demand signals toward a trailer (15), that is attached to the commercial vehicle, via CAN communication protocol/interface (ISO 11992) or via a trailer ethernet communication interface.

Accordingly, the redundant pair of the primary EBS brake control unit (which is integrated into the air treatment unit 4, as explained above) is provided by the intelligent central redundant pressure modulator 7. Modulator 7 is actuating the respective pneumatic backup port of the front axle pressure modulator 9 and of the rear axle pressure modulator 10 using a service brake control output. Moreover, modulator 7 provides a pneumatic control signal to the trailer control module 8 using the parking brake pneumatic output. Furthermore, the parking brake output of the central pressure modulator 7 is connected to the combination (spring brake or parking brake) actuators 13.

In case of failure of the primary EBS brake system/control unit, the central pressure modulator 7 takes over the control of the service brake control.

The primary brake system can receive electrical service brake demand signals from external sources 16, and optionally brake demand signals from foot brake sensor 5.

The redundant central pressure modulator 7 can receive electric brake demand signals from external sources 17, and optionally from a foot brake sensor 5 or a hand control unit 6 for the parking brake function.

The attached drawings (Figs. 1 to 3) schematically show in various types of drawing lines (solid lines, broken lines, dotted lines, chain dotted lines, etc.) the various kinds of electric and pneumatic lines that are provided to accomplish the functions of and connections in the brake system (e.g. analogous electric supply and signal lines and digital electric signal lines, each both for the first, second and third (electric/electronic) brake circuits, as well as pneumatic supply lines and pneumatic control lines, both for the service brake and the park brake). Thus, additional features and functions of the brake system, which are not explicitly discussed in this specification, but which are part of the present disclosure, become evident from the drawings.

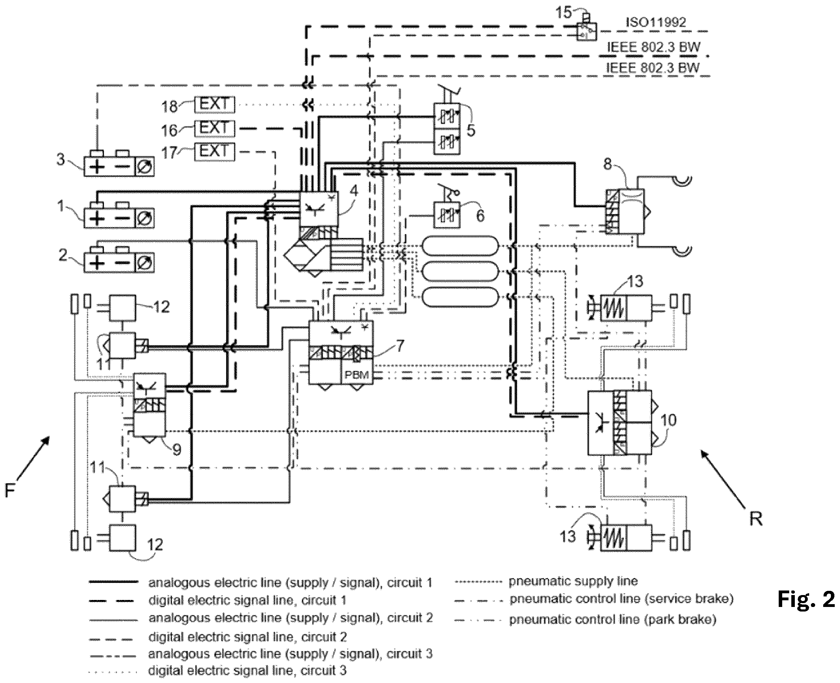

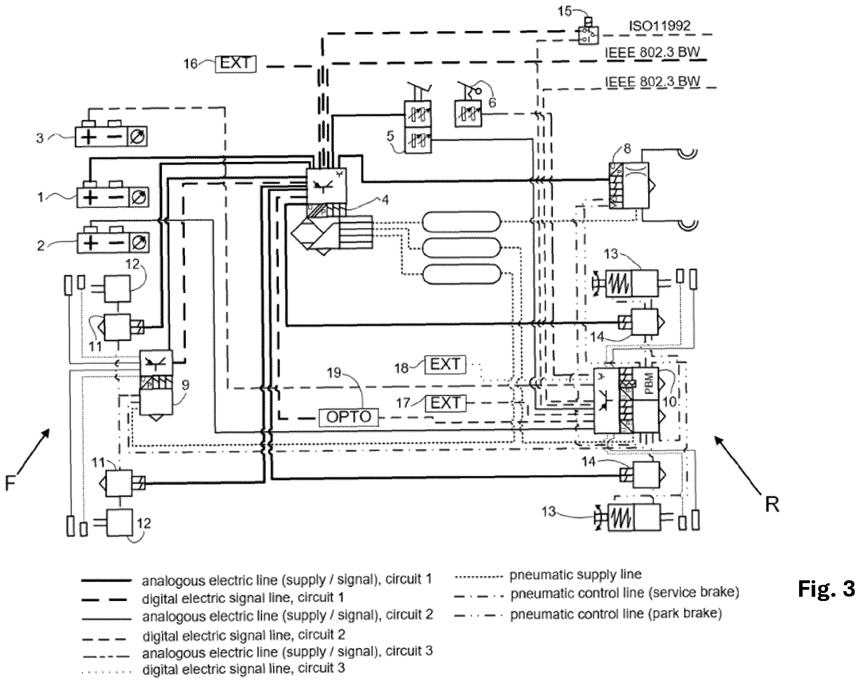

Unless otherwise stated or otherwise shown in the drawings, the preceding explanations for Fig. 1 substantially apply mutatis-mutandis also to Figs. 2 and 3, wherein the same reference numerals are utilized to designate the same or corresponding features.

In the embodiment shown in Fig. 1, the overall brake system is redundantly supplied electrically by batteries 1 and 2. In another implementation, which is shown in Fig. 2, it can be provided that the redundant central electro-pneumatic pressure modulator 7 is equipped with an independent power supply input for the parking brake circuit, i.e. a separate, independent electric power supply/battery 3 is provided particularly for the parking brake module (PBM) of the central pressure modulator 7. This configuration results in a three-circuit redundant brake system architecture (see Fig. 2). The respectively resulting third (electric/electronic) brake circuit may also comprise a separate electric connection between the hand control unit 6 and the central pressure modulator 7 and/or a separate external source 18 for providing electrical brake demand signals to the central pressure modulator 7.

In a further alternative embodiment shown in Fig. 3, the central 2-channel electro-pneumatic pressure modulator 7 can optionally replace the rear axle pressure modulator 10. Thus, instead of having the two separate components of the central pressure modulator 7 and the rear axle pressure modulator 10, in this embodiment, the central pressure modulator 7 and the rear axle pressure modulator 10 are integrated with each other, i.e. form just one single component. Thus, in Fig. 3, the central pressure modulator is now designated by reference sign 10.

In this embodiment, additional pressure control modules/valves (PCVs) 14 may be provided which pneumatically actuate the service brake chambers of the spring brake combination actuators 13 which are associated with the rear axle R. The pressure control valves (PCVs) 14 can be electrically controlled by the primary EBS brake control unit (which is integrated into the air treatment unit 4, as explained above).

As in the embodiment of Fig. 2, also in the embodiment of Fig. 3 it can be provided that the redundant central electro-pneumatic pressure modulator, now 10, is equipped with an independent power supply input for the parking brake circuit, i.e. a separate, independent electric power supply/battery 3 can be provided particularly for the parking brake module (PBM) of the central pressure modulator 10. Thus, Fig. 3 shows the electro-pneumatic brake system with the redundant pressure modulator 10 mounted on the rear axle R having a separated power supply 3 for the parking brake module. A digital communication line 19 may be provided between the air treatment unit 4 and the pressure modulator 10.

### LIST OF REFERENCE SIGNS

- 1: electric power supply/battery
- 2: electric power supply/battery
- 3: electric power supply/battery
- 4: air supply/treatment unit
- 5: foot brake sensor (FBS)
- 6: hand control unit (HCU)
- 7: central, redundant, 2-channel electro-pneumatic pressure modulator
- 8: trailer control module
- 9: front axle pressure modulator
- 10: rear axle pressure modulator
- 11: pressure control module/valve (PCV)
- 12: service brake chamber/actuators
- 13: spring brake combination cylinder/actuator
- 14: pressure control module/valve (PCV)
- 15: communication with trailer
- 16: external source for electrical service brake demand signals
- 17: external source for electrical parking and/or service brake demand signals
- 18: external source for electrical brake demand signals
- 19: communication line
- F: front axle of vehicle
- R: rear axle of vehicle

## Claims

1. Brake system for a commercial vehicle, **characterized by** a redundant electro-pneumatic service brake system and an electro-pneumatic parking brake system comprising a central 2-channel electro-pneumatic pressure modulator (7), wherein one of the pneumatic outputs of the pressure modulator (7) controls the parking brake system, and wherein another of the pneumatic outputs of the pressure modulator (7) controls the service brake system.

2. Brake system according to claim 1, **characterized in that** it comprises a primary electronic brake control unit which is integrated into an air treatment unit (4) of the brake system.

3. Brake system according to claim 2, **characterized in that** the commercial vehicle comprises at least one front axle (F) and at least one rear axle (R), and **in that** the primary electronic brake control unit is configured such that it electronically controls a front axle pressure modulator (9), pressure control valves (11) on the front axle (F), and a rear axle pressure modulator (10), wherein front axle wheel brakes are actuated by service brake actuators (12) which are pneumatically actuated by the pressure control valves (11), and wherein the rear axle pressure modulator (10) actuates spring brake combination actuators (13) on the rear axle (R).

4. Brake system according to claim 2 or claim 3, **characterized in that** the primary electronic brake control unit is configured such that it electronically controls a trailer control module (8).

5. Brake system according to any one of claims 2 to 4, **characterized in that** the primary electronic brake control unit is part of a first electric/electronic brake circuit, and **in that** the central pressure modulator (7) is part of a second electric/electronic brake circuit.

6. Brake system according to any one of claims 2 to 4, **characterized in that** the rear axle pressure modulator (10) is replaced by the redundant 2-channel electro-pneumatic pressure modulator (7) with integrated electro-pneumatic service and parking brake functions.

7. Brake system according to any one of claims 2 to 6, **characterized in that** an electric power supply (1) is provided for the primary electronic brake control unit which is integrated into the air treatment unit (4), and **in that** a separate, independent electric power supply (2) is provided for the redundant 2-channel electro-pneumatic pressure modulator (7).

8. Brake system according to claim 7, **characterized in that** a further, separate, independent electric power supply (3) is provided for the parking brake module (PBM) of the redundant 2-channel electro-pneumatic pressure modulator (7).

9. Brake system according to any one of the preceding claims, **characterized in that** it is configured such that the central 2-channel electro-pneumatic pressure modulator (7) can receive electronic parking brake demand signals from external sources (17, 18).

10. Brake system according to any one of the preceding claims, **characterized in that** it is configured such that the central 2-channel electro-pneumatic pressure modulator (7) can receive electronic parking brake demand signals from a hand control unit (6) to fulfil driver brake demands.

11. Brake system according to any one of the preceding claims, **characterized in that** it is configured such that the central 2-channel electro-pneumatic pressure modulator (7) can receive electronic service brake demand signals from external sources (17, 18).

12. Brake system according to any one of the preceding claims, **characterized in that** it is configured such that the central 2-channel electro-pneumatic pressure modulator (7) can receive electronic service brake demand signals from a foot brake sensor (5) to fulfil driver brake demands.

13. Brake system according to any one of the preceding claims, **characterized in that** it is configured such that the central 2-channel electro-pneumatic pressure modulator (7) can control a trailer brake system (8, 15) using a digital communication interface.

14. Brake system according to claim 13, **characterized in that** it is configured such that the central 2-channel electro-pneumatic pressure modulator (7) can control a trailer brake system (8, 15) using digital trailer CAN (ISO 11992) communication interface.

15. Brake system according to claim 13, **characterized in that** it is configured such that the central 2-channel electro-pneumatic pressure modulator (7) can control a trailer brake system (8, 15) using digital trailer ethernet communication interface.
